# FASCICULE DE BREVET EUROPEEN

(11) **EP 4 176 945 B1**
(45) Date de publication et mention de la délivrance du brevet: **30.04.2025**
(21) Numéro de dépôt: 22204306.9
(22) Date de dépôt: 28.10.2022
(51) Int. Cl.: A63C 5/12

(54) **NOYAU POUR SKI ET SKI INCLUANT UN TEL NOYAU**
SKIKERN UND SKI MIT EINEM SOLCHEN KERN
SKI CORE AND SKI INCLUDING SUCH A CORE

(30) Priorité: 03.11.2021 FR 2111643; 20.06.2022 FR 2206009
(43) Date de publication de la demande: 10.05.2023
(73) Titulaire: Salomon S.A.S., 74370 Epagny Metz-Tessy (FR)
(72) Inventeur: MIETTE, Philippe, 74940 Annecy-le-Vieux (FR)
(74) Mandataire: Lapierre, Stéphane

(56) Documents cités:
- WO-A1-03/008052
- WO-A1-2004/060503
- FR-A1- 3 058 899

## Description

La présente invention concerne la fabrication de ski, et en particulier la fabrication de ski de fond. Les skis sont en général constitués d'une structure composite dans laquelle deux éléments structurels longitudinaux (un renfort supérieur et renfort inférieur) sont maintenus à distance l'un de l'autre par un élément intercalaire, qu'on appelle le noyau. La présente invention vise tout particulièrement à améliorer la construction du noyau.

Le poids d'un ski est toujours un critère important lorsqu'il s'agit d'évaluer un ski. C'est d'autant plus le cas pour les pratiques spécifiques que sont le ski de fond ou même le ski de randonnée.

En effet, au cours de ces pratiques, l'utilisateur est amené à avancer ski au pied sans qu'il puisse bénéficier de la gravité, bien au contraire. C'est pourquoi la recherche de légèreté est constante pour les concepteurs et fabricants de ski.

Bien entendu, la recherche de légèreté ne doit pas se faire au détriment des caractéristiques mécaniques du ski, et notamment de sa raideur, et la recherche du meilleur compromis est permanente.

Le document EP 2745884 décrit un ski prévu pour le ski de randonnée que le fabricant a cherché à rendre le plus léger possible. Pour ce faire, il a recours à deux moyens. En premier lieu, la forme extérieure du ski est choisie afin d'optimiser l'utilisation de la matière. A cette fin, toutes les portions du ski qui ne servent pas aux fixations de ski ont un profil convexe. En second lieu, on réalise des évidements sous la forme de rainures longitudinales dans la partie centrale inférieure du noyau. Dans le document EP 2745884, les rainures étant longitudinales, elles sont relativement faciles et peu couteuses à faire, par exemple par fraisage. Néanmoins, l'allègement qu'elles permettent est limité. Dans le cas d'espèce, selon une section transversale du ski, seule environ 25 % de la largeur du noyau est concerné par l'allègement dû aux nervures. Il est en fait difficile de dépasser cette valeur sous peine d'affaiblir la résistance à l'écrasement selon la direction transversale du noyau. Compte tenu du fait que les nervures ne peuvent être traversantes et qu'il faut un minimum d'épaisseur de noyau sur les nervures pour garantir une rigidité suffisante de celui-ci, l'allègement final obtenu ne pourra dépasser les 17 %. De plus, le document FR3058899 A1 divulgue un ski suivant le préambule de la revendication 1.

L'objectif de l'invention est de construire un ski qui bien qu'allégé par rapport aux ski équivalent garde les mêmes caractéristiques mécaniques, en particulier un comportement dynamique ; une raideur en flexion et en torsion équivalente.

L'objectif de l'invention est atteint par la revendication 1 qui fournit un ski comprenant un noyau comportant un chant latéral gauche, un chant latéral droit et, au moins une âme centrale placée entre les deux chants latéraux, lesdits chants latéraux et ladite au moins une âme centrale s'étendant selon un axe longitudinal sensiblement parallèle à l'axe longitudinal du ski. Le ski est caractérisé en ce que le noyau comprend
- une pluralité d'ailettes gauches disposée entre au moins une âme centrale et le chant latéral gauche, chaque ailette gauche faisant un angle compris entre 5° et 85° ou entre 95° et 175° avec l'axe longitudinal du ski,
- une pluralité d'ailettes droite est disposée entre au moins une âme centrale et le chant latéral droit, chaque ailette droite faisant un angle compris entre 5° et 85° ou entre 95° et 175° avec l'axe longitudinal du ski,

Dans un mode de réalisation de l'invention, dans son épaisseur, le ski est composé d'une succession cinq éléments depuis le sol, à savoir, une semelle de glisse, un renfort inférieur, le noyau, un renfort supérieur et une couche de dessus, au moins les chants latéraux gauche et droite s'étendant sur toute la hauteur du noyau.

Dans un mode de réalisation de l'invention, la hauteur du noyau est toujours au moins égale à 50% de la hauteur du ski dans la zone évidée du noyau.

Dans un mode de réalisation de l'invention, le noyau comporte un plateau supérieur horizontal, le chant latéral gauche et le chant latéral droit s'étendant tous deux vers le bas depuis les bords latéraux, respectivement gauche et droit, du plateau supérieur.

Selon l'invention, le noyau comprend une pluralité d'évidements, chaque évidement étant délimité par deux ailettes adjacentes, chaque évidement étant borgne ou traversant toute la hauteur du noyau et lesdits évidements étant disposés sur la majeure partie d'une portion centrale du noyau, selon la direction longitudinale.

Dans un mode de réalisation de l'invention, le noyau est composé de deux composants assemblés l'un à l'autre, un ces composants portant les chants latéraux gauche et droit. Préférentiellement, un des composants du noyau est une plaque de sorte à refermer les évidements. Préférentiellement, que la plaque porte la ou les âmes centrales et/ou les ailettes.

Dans un mode de réalisation de l'invention, que les ailettes gauches et les ailettes droites sont disposées symétriquement par rapport à l'axe longitudinal du ski.

Dans un mode de réalisation de l'invention,
- dans une portion antérieure du noyau, les ailettes gauches font un angle compris entre 5° et 85° avec l'axe longitudinal du ski et les ailettes droites font un angle compris entre 95° et 175° avec l'axe longitudinal du ski, et,
- dans une portion postérieure du noyau, les ailettes gauches font un angle compris entre 95° et 175° avec l'axe longitudinal du ski et les ailettes droites font un angle compris entre 5° et 85° avec l'axe longitudinal du ski,
   ou inversement.

Dans un mode de réalisation de l'invention, le noyau est réalisé par injection.

Dans un mode de réalisation de l'invention, le noyau est constitué d'une mousse PU.

Dans un mode de réalisation de l'invention, les ailettes sont agencées de sorte que leur largeur est sensiblement égale à l'espace séparant deux ailettes adjacentes.

Dans un mode de réalisation de l'invention, la base du chant latéral gauche, respectivement du chant latéral droit, respectivement d'une âme centrale, respectivement des ailettes gauches et droites, présente une largeur L_{42G}, respectivement L_{42D}, respectivement L₄₄, respectivement L_{46G} et L_{46D}, qui est sensiblement égale et comprise entre deux et huit millimètres.

Dans un mode de réalisation de l'invention, les ailettes gauches, respectivement les ailettes droites, du noyau ne forment par toutes le même angle avec l'axe longitudinal du ski.

Dans un mode de réalisation de l'invention, le noyau comprend deux âmes centrales.

L'invention sera mieux comprise à la lecture de la description suivante et aux dessins annexés dans lequel :
[Fig. 1] La figure 1 est une vue en coupe « transversale » d'un ski,
[Fig. 2] La figure 2 est une vue de côté d'un noyau selon l'invention,
[Fig. 3] La figure 3 est une vue de dessous d'un noyau selon un premier mode de réalisation de l'invention,
[Fig. 4] La figure 4 est une vue en coupe du noyau selon IV-IV de la figure 3,
[Fig. 5] La figure 5 est une vue de dessous d'un noyau selon un deuxième mode de réalisation de l'invention,
[Fig. 6] La figure 6 est une vue de dessous d'un noyau selon un troisième mode de réalisation de l'invention,
[Fig. 7] La figure 7 est une vue en coupe, analogue à la coupe de la figure 4, d'un noyau selon un quatrième mode de réalisation de l'invention,
[Fig. 8] La figure 8 est une vue schématique montrant diverses configurations de noyau selon d'autres modes de réalisation de l'invention,
[Fig. 9] La figure 9 est une vue en coupe « transversale », analogue à la coupe de la figure 4, d'un ski selon un cinquième mode de réalisation,
[Fig. 10] La figure 10 est une vue en coupe, analogue à la coupe de la figure 4, d'un noyau selon le mode de réalisation de la figure 9,
[Fig. 11] La figure 11 est une section du noyau selon XI-XI de la figure 10,
[Fig. 12] La figure 12 est une vue en coupe, analogue à la coupe de la figure 4, d'un noyau selon un sixième mode de réalisation,
[Fig. 13] La figure 13 est une vue en coupe, analogue à la coupe de la figure 4, d'un noyau selon un septième mode de réalisation,
[Fig. 14] La figure 14 est une vue en coupe, analogue à la coupe de la figure 4, d'un noyau selon un huitième mode de réalisation,
[Fig. 15] La figure 15 est une vue en coupe, analogue à la coupe de la figure 4, d'un noyau selon un neuvième mode de réalisation,
[Fig. 16] La figure 16 est une vue en coupe, analogue à la coupe de la figure 4, d'un noyau selon un dixième mode de réalisation, avant assemblage,
[Fig. 17] La figure 17 est une vue en coupe, analogue à la coupe de la figure 4, d'un noyau de la figure 16, après assemblage,
[Fig. 18] La figure 18 est une section du noyau selon XVIII-XVIII de la figure 16,
[Fig. 19] La figure 19 est une vue en coupe « transversale », analogue à la coupe de la figure 4, d'un ski selon un onzième mode de réalisation,
[Fig. 20] La figure 20 est une vue en coupe, analogue à la coupe de la figure 4, d'un noyau selon le mode de réalisation de la figure 19,
[Fig. 21] La figure 21 est une vue de dessous du noyau de la figure 20,

Dans la suite de la description, il sera fait usage de termes tels que « horizontal », « vertical », « transversal », « supérieur », « inférieur », « latéral », « haut », « bas », « droite », « gauche », « avant », « arrière », « devant », « derrière ». Ces termes doivent être interprétés de façon relative en relation avec la position normale que le ski occupe quand l'utilisateur l'utilise sur une piste sensiblement plane.

On utilisera également un repère dont la direction arrière/avant correspond à l'axe X, la direction transversale ou droite/gauche correspond à l'axe Y et la direction verticale ou bas/haut correspond à l'axe Z.

Par la suite, on fera référence à une orientation angulaire par rapport à l'axe longitudinal X du ski. Cet angle est mesuré de sorte à qualifier l'orientation d'un élément par rapport à l'axe longitudinal X du ski en valeur absolue. Ainsi, l'angle est mesuré dans un sens trigonométrique ou anti-trigonométrique en fonction de la localisation de l'élément par rapport à l'axe longitudinal X du ski afin d'avoir toujours une valeur positive, comprise entre 0 et 180°.

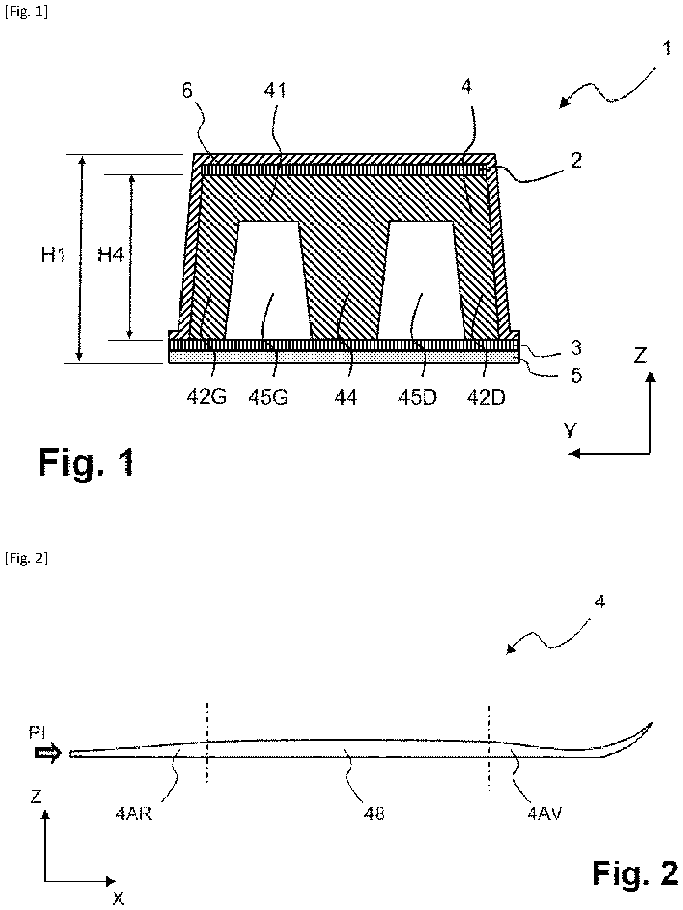

La figure 1 montre en coupe transversale un ski 1 équipé d'un noyau selon l'invention. De manière connue, le ski est constitué d'une structure mécanique composite qui comprend un renfort supérieur 2, un renfort inférieur 3, lesquels sont maintenus à distance l'un de l'autre par le noyau 4. Ainsi, le noyau est prévu pour s'intercaler entre le renfort supérieur et le renfort inférieur. Une semelle de glisse 5 est mise en place sous le renfort inférieur 3 et une couche de dessus 6 vient recouvrir noyau 4 et renfort supérieur 2. Selon un mode de réalisation le renfort supérieur 2 et/ou le renfort inférieur 3 peut comprendre plusieurs fines couches, ces couches étant nettement plus fine que l'épaisseur du noyau.

Le noyau 4 selon l'invention comporte un chant latéral gauche 42G, un chant latéral droit 42D ainsi qu'une âme centrale 44 est placée entre les deux chants latéraux 42G, 42D. La couche de dessus 6 est appliquée sur les surfaces extérieures des chants latéraux. Entre l'âme centrale 44 et les chants latéraux 42G, 42D, des évidements 45G, 45D sont ménagés et séparés les uns des autres longitudinalement par des ailettes 46G, 46D. Autrement dit, chaque évidement gauche 45G est délimité par l'âme centrale 44, le chant latéral gauche 42G et deux ailettes gauches 46G successives. De même, chaque évidement droit 45D est délimité par l'âme centrale 44, le chant latéral droit 42D et deux ailettes droites 46D successives.

Selon un premier mode de réalisation, le noyau comporte un plateau supérieur horizontal 41. Le chant latéral gauche 42G et le chant latéral droit 42D s'étendent vers le bas, en direction du renfort inférieur 3, respectivement depuis le bord latéral gauche et le bord latéral droit dudit plateau supérieur. Les deux chants latéraux 42G, 42D sont essentiellement verticaux. En pratique, leur surface extérieure est légèrement inclinée et fait avec la verticale un angle de quelques degrés. La couche de dessus 6 est appliquée sur les surfaces extérieures des chants latéraux. Dans une version alternative, la couche de dessus couvre uniquement la face supérieure du noyau et ainsi, ne couvre pas les chants latéraux. L'âme centrale 44 est placée entre les deux chants latéraux 42G, 42D. Issue, elle aussi, du plateau supérieur 41, elle s'étend vers le bas, en direction du renfort inférieur 3, jusqu'à venir au contact de ce dernier. Entre l'âme centrale 44 et les chants latéraux 42G, 42D, des évidements 45G, 45D sont ménagés et séparés les uns des autres longitudinalement par des ailettes 46G, 46D.

La figure 2 représente en vue de profil, le noyau 4. De longueur comprise entre 140 et 180 cm (pour un ski de longueur comprise entre 170 et 210 cm), il présente une épaisseur qui varie entre quelques millimètres aux extrémités (1 mm -2 mm) et quelques centimètres dans la région centrale (2 cm - 3 cm). La vue de profil permet de voir l'étendue longitudinale de la zone centrale 48 où sont ménagés les évidements 45G, 45D. La zone en question est délimitée par le trait pointillé. Les évidements sont disposés sur la majeure partie de cette portion centrale 48 du noyau (60 % - 70 %). De préférence, aucun évidement n'est ménagé dans la zone avant 4AV, ni dans la zone arrière 4AR du noyau 4. La hauteur des évidements 45G, 45D est variable le long de la longueur du noyau. De préférence, cette hauteur varie avec la courbe d'épaisseur du noyau le long de celui-ci de sorte que l'épaisseur « L*₄₁* » du plateau supérieur reste sensiblement constante sur toute la longueur du noyau. En pratique, l'épaisseur « L*₄₁* » est comprise entre deux et huit millimètres. Dans le mode de réalisation représenté ici, l'épaisseur « L*₄₁* » est égale à quatre millimètres. Dans une version alternative où les évidements 45G, 45D sont tous traversants, cette hauteur suit la courbe d'épaisseur du noyau.

Dans la zone centrale 48 du noyau, c'est-à-dire la zone évidée du noyau, l'épaisseur H4 du noyau 4 est toujours au moins égale à 50% de la hauteur H1 du ski 1.

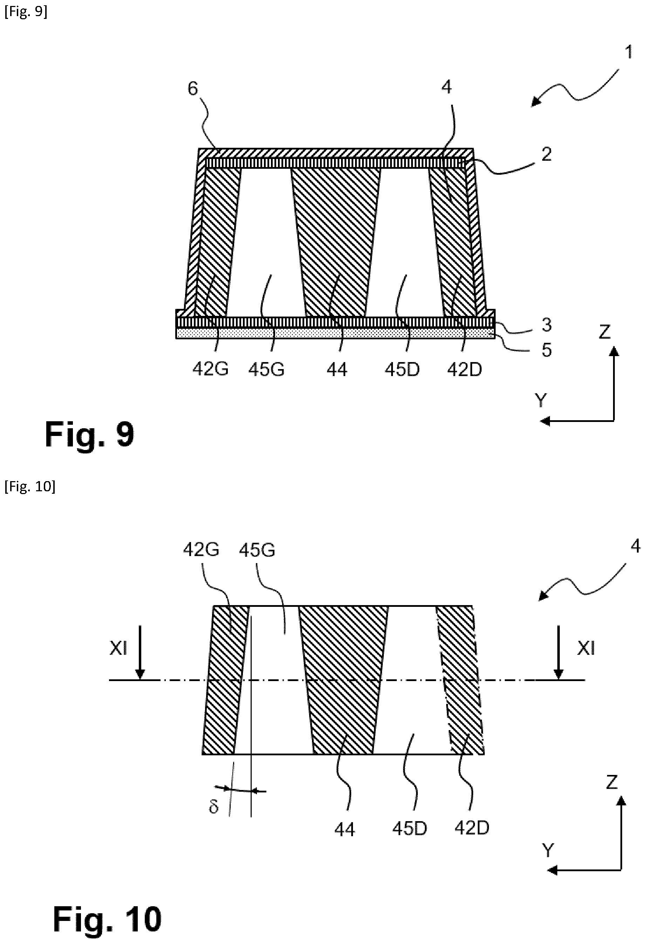

Dans le premier mode de réalisation décrits aux figures 1 à 4, les évidements 45G, 45D ne sont pas traversants et le plateau supérieur 41 est plein. Néanmoins, il est envisageable que tout ou partie des évidements soient traversant sur toute la hauteur du noyau et qu'ils traversent par conséquent le plateau supérieur. Ces exemples seront illustrés par la suite, comme par exemple, les modes de réalisation représentés dans les figures 9 à 13.

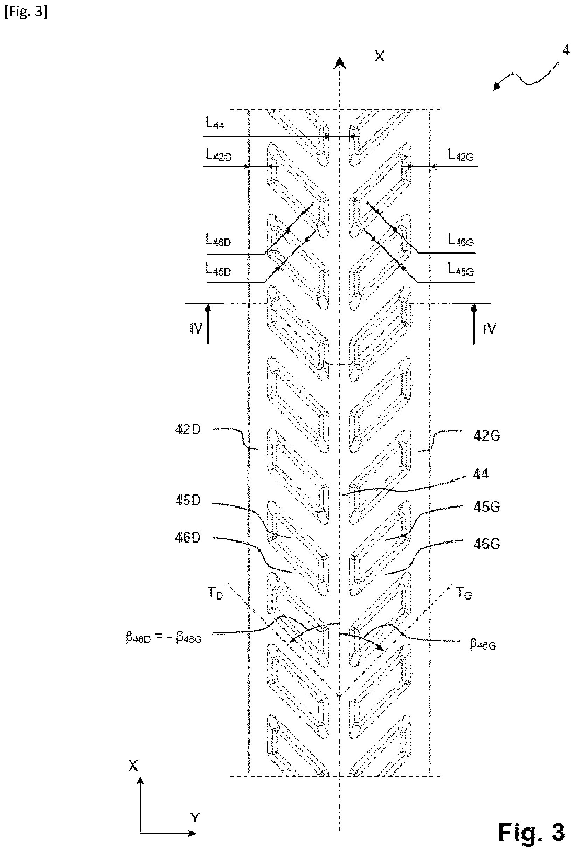

La figure 3 représente en vue de dessous la partie centrale 48 du noyau selon le premier mode de réalisation de l'invention. On peut y voir le chant latéral gauche 42G, le chant latéral droit 42D et l'âme centrale 44. Tous trois sont orientés selon l'axe longitudinal du noyau « X ». Le chant latéral gauche 42G, respectivement, le chant latéral droit 42D, est relié à l'âme centrale par des ailettes gauches 46G, respectivement par des ailettes droites 46D. Entre deux ailettes gauches 46G adjacentes, respectivement entre deux ailettes droites 46D adjacentes, un évidement gauche 45G, respectivement droit 45D, est ménagé. La base de chacun des évidements a la forme d'un parallélogramme. Le sommet des évidements a également la forme d'un parallélogramme dont les dimensions sont légèrement inférieures du fait que les parois des ailettes, de l'âme centrale, du chant latéral gauche, respectivement du chant latéral droit ne sont pas rigoureusement verticales, mais présentent un angle de quelques degrés, dont on verra plus loin le rôle.

Les ailettes gauches 46G sont toutes orientées selon une direction T_{G} qui fait un angle β_{46G} avec l'axe longitudinal X du ski. De manière symétrique, les ailettes droites 46D sont toutes orientées selon une direction T_{D} qui fait un angle β_{46D} avec l'axe longitudinal X du ski. Ainsi, les angles β_{46G} et β_{46D} sont égaux en valeur mais opposé par rapport à l'axe longitudinal X du ski. Ces angles β_{46G} et β_{46D} doivent être différent de l'angle droit (90°) ou pour le moins, ne pas s'en approcher. On pourra choisir un angle β_{46G}, β_{46D} compris entre 5° et 85°. De préférence, on choisira une valeur comprise entre 30° et 60°. Dans le premier mode de réalisation de l'invention, l'angle β_{46G}, β_{46D} est sensiblement égal à 45°.

La largeur « *L_{42G}* » du chant latéral gauche 42G, la largeur « *L_{42D}* » du chant latéral droit, la largeur de l'âme centrale « *L₄₄* » et la largeur « *L_{46G}, L_{46D}* » des ailettes ont des valeurs comprises entre deux et huit millimètres. On notera qu'il s'agit de mesure de largeur faites à la base de ces différents éléments selon une direction transversale perpendiculaire à leur plus grande longueur. Pour les ailettes gauches et droites, la mesure est faite selon une direction perpendiculaire à la direction T_{G}, respectivement T_{D}. Dans le cas d'espèce, les largeurs « *L_{42G} », « L_{42D} », « L₄₄* » et « *L_{46G}, L_{46D}* » sont sensiblement égales à quatre millimètres.

Le noyau 4 est, dans son intégralité, de préférence réalisé par injection de mousse PU. On choisit un PU de masse volumique comprise entre 250 et 300 kg/m³. Pour le ski de longueur 2100 mm du premier mode de réalisation, le noyau 4, dont la longueur est 1900 mm, présente une masse de 217 g. Cette masse est à comparer à la masse d'un noyau plein, c'est-à-dire sans évidement, ayant exactement les mêmes dimensions extérieures (longueur, largeur, courbe d'épaisseur) et fait du même matériau, laquelle est de 297 g. Ainsi la géométrie particulière du noyau de l'invention permet un gain de poids de 27% par rapport à l'art antérieur. Rapporté au poids total du ski, cela représente un gain de poids de 12% environ. Bien entendu, d'autres matériaux et d'autres modes de réalisation sont envisageables dans le cadre de l'invention comme, par exemple, l'usinage ou encore l'impression 3D.

La distance « *L_{45G}, L_{45D}* », entre deux ailettes adjacentes, et mesurée à la base des ailettes, est comprise entre deux et dix millimètres. Dans le cas d'espèce « *L_{45G}, L_{45D}* » a une valeur d'environ sept millimètres. Cette distance correspond à la largeur d'un évidement 45G, 45D. Il s'agit d'une valeur préférentielle en ce qu'elle optimise le gain de poids du noyau tout en limitant la perte de rigidité de ce dernier.

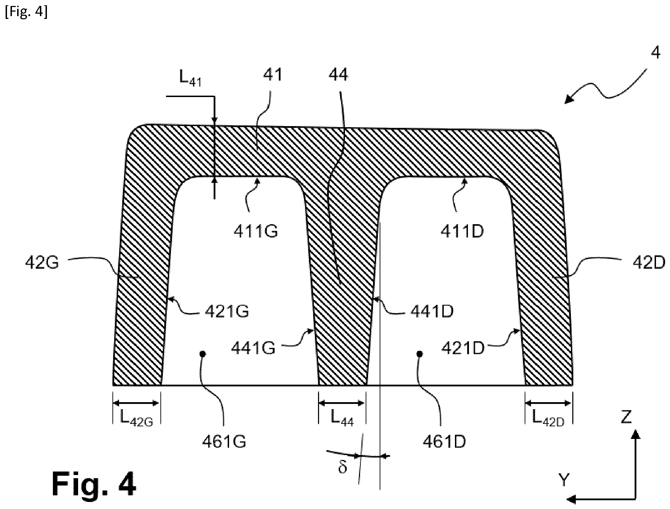

La figure 4 représente la vue en coupe IV-IV du noyau. Il est à noter également que cette vue en coupe n'est pas faite selon un plan unique mais par selon une succession de plans, laquelle étant matérialisée par la ligne IV-IV à la figure 3. La forme des évidements 45G, 45D est essentiellement celle d'une pyramide tronquée dont la base serait un parallélogramme. En effet, ces évidements 45G, 45D présentent des parois verticales 421G, 421D, 441G, 441D, 461G et 461D respectivement adossées au flan latéral gauche 42G, au flan latéral droit 42D, à l'âme centrale 44, aux ailettes gauches 46G et aux ailettes droites 46D, font un angle « δ » avec l'axe vertical Z. Cet angle est compris entre 2° et 10° et de préférence égale 4°.

La géométrie particulière du noyau selon l'invention permet d'optimiser la fabrication d'un ski. En effet, le noyau est non seulement léger, tout en garantissant une excellente rigidité, mais il est plus facile à produire par injection. Les nombreux évidements allègent le noyau et les ailettes font office de nervures de structure qui empêchent le rapprochement des chants latéraux avec l'âme centrale. Lors de la fabrication par injection du noyau, l'inclinaison des ailettes facilite le flux de la matière et ainsi le remplissage uniforme du moule. Cette amélioration est particulièrement significative lorsqu'on injecte le noyau depuis un point d'injection PI positionnée à une extrémité du noyau (avant ou arrière). Il s'avère que l'injection se passe mieux lorsque l'inclinaison β_{46G}, β_{46D} des ailettes est comprise entre 30° et 60°. Le dimensionnement des ailettes, de l'âme centrale et des chants avec une épaisseur sensiblement constante contribue également à améliorer l'injection. L'inclinaison δ des parois délimitant les évidements permet une solution par injection avec des matrices de moules simples grâce à cette dépouille.

Les autres modes de réalisation décrit ci-après sont des variations concernant la géométrie du noyau. Tout ce qui a été décrit concernant les matières employées et la fabrication vaut également pour les modes de réalisation suivants. Ils permettent ainsi tous l'optimisation de la fabrication d'un ski pour les raisons expliquées précédemment.

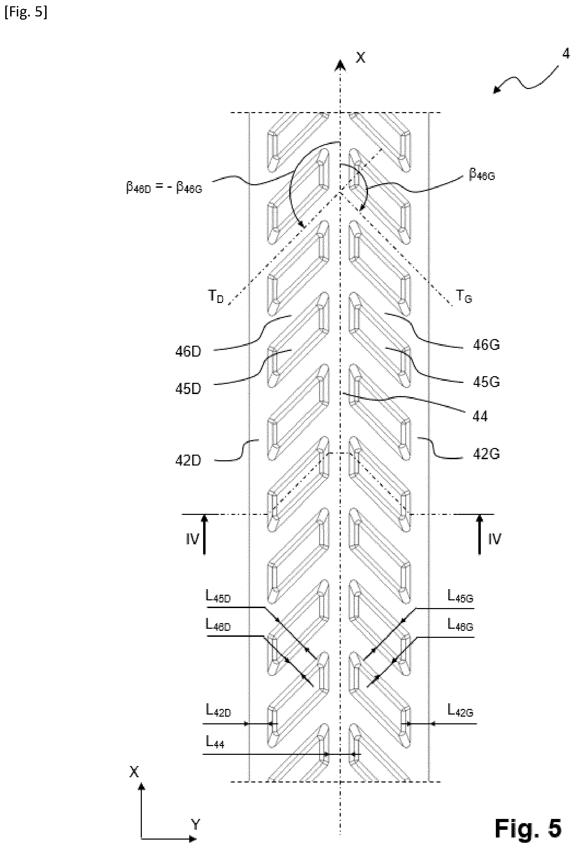

La figure 5 représente en vue de dessous un noyau 4 selon un deuxième mode de réalisation de l'invention très proche du premier mode de réalisation. Ici, seul l'inclinaison des ailettes 46G, 46D diffère. Ainsi, l'angle β_{46G}, β_{46D} est compris entre 95° et 175°. De préférence, on choisira une valeur comprise entre 120° et 150°. Dans cet exemple, l'angle β_{46G}, β_{46D} est sensiblement égal à 135°. Les autres caractéristiques et bénéfices sont similaires au premier mode de réalisation.

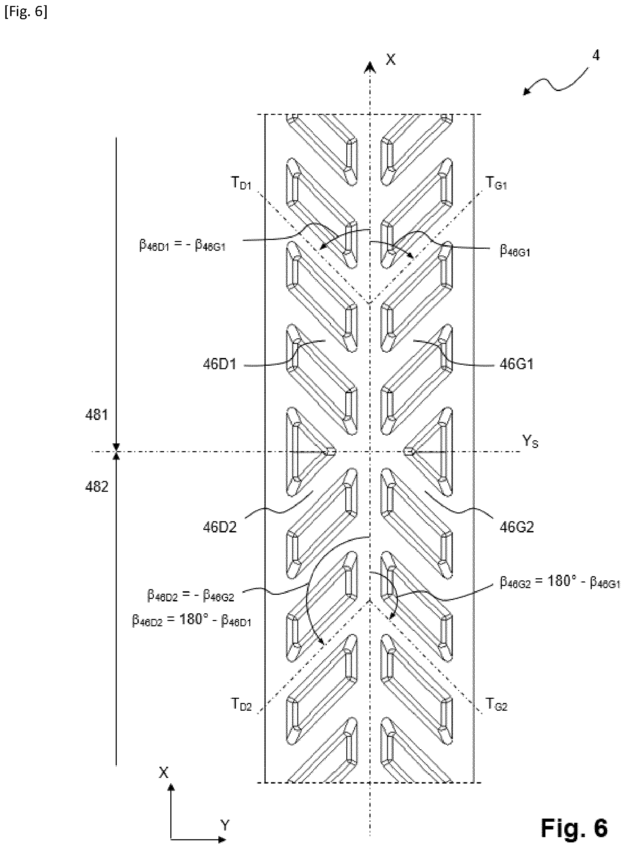

La figure 6 représente en vue de dessous un noyau 4 selon un troisième mode de réalisation de l'invention. Il s'agit d'une vue partielle dans laquelle seule la partie centrale est représentée. Beaucoup de caractéristiques de ce troisième mode de réalisation sont identiques à celles du premier mode de réalisation et ne seront pas décrite à nouveau dans ces lignes. Il s'agit notamment des épaisseurs respectives des chants latéraux, de l'âme centrale, des ailettes et du plateau supérieur.

Une des caractéristiques de ce mode de réalisation réside dans le fait que le noyau 4 présente une partie antérieure 481 et une partie postérieure 482, séparée l'une de l'autre au niveau d'un axe transversal « Y_{S} ». L'axe Y_{S} constitue un axe de symétrie pour la disposition des ailettes et des évidements qui les séparent les unes des autres. Dans la partie antérieure 481 du noyau 4, les ailettes gauches 46G1 font un angle β_{46G1} avec l'axe longitudinal X du ski, tandis que les ailettes droites 46D1 font un angle β_{46D1} avec le même axe longitudinal X du ski. Ces angles β_{46G1} et β_{46D1} sont compris entre 5° et 85°, de préférence entre 30° et 60°. Dans cet exemple, les ailettes gauches 46G1 et les ailettes droites 46D1 sont disposées symétriquement par rapport à l'axe longitudinal X du ski. Ainsi, l'angle β_{46G1} est égal à l'angle β_{46D1}. Dans la partie postérieure 482, en revanche, les ailettes gauches 46G2 font un angle β_{46G2} complémentaire à l'angle β_{46G1}, c'est-à-dire, d'une valeur égale à 180°- β_{46G1}, et les ailettes droites 46D2 font un angle β_{46D2} complémentaire à l'angle β_{46D1}, c'est-à-dire, d'une valeur égale à 180°- β_{46D1}. Ces angles β_{46G2} et β_{46D2} sont compris entre 95° et 175°, de préférence entre 120° et 150°. Dans cet exemple, les ailettes gauches 46G2 et les ailettes droites 46D2 sont disposées symétriquement par rapport à l'axe longitudinal X du ski. Ainsi, l'angle β_{46G2} est égal à l'angle β_{46D2}. Dans le deuxième mode de réalisation illustré à la figure 6, les angles β_{46G1} et β_{46D1} valent 45° et les angles β_{46G2} et β_{46D2} valent 135°. On notera que les ailettes gauches 46G2 et les ailettes droites 46D2 de la partie postérieure 482 sont disposées en symétrie respectivement des ailettes gauches 46G1 et des ailettes droites 46D1 de la partie antérieure 481 par rapport à l'axe transversal Ys.

Préférentiellement, l'axe de symétrie Ys est sensiblement positionné longitudinalement au droit de la zone des métatarses d'une chaussure de fond en prise avec une fixation solidaire du ski, lorsque le skieur est en phase d'appui sur le ski. En effet, un tel positionnement assure une meilleure répartition des efforts de poussée et donc une meilleure propulsion. On obtient un meilleur équilibre de mouvement des skis.

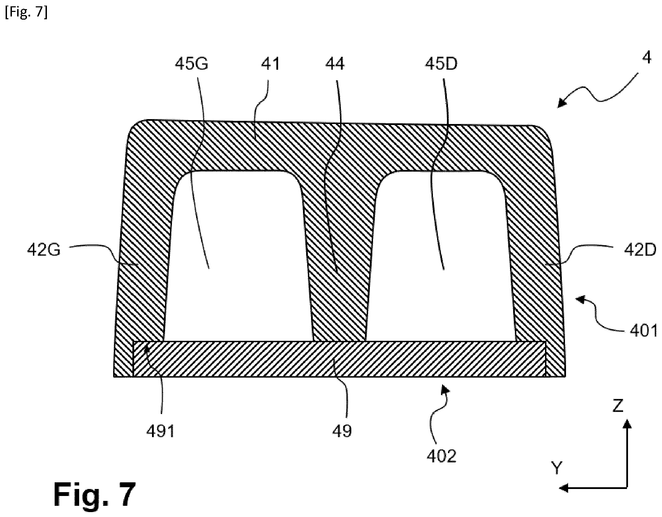

La figure 7 présente une vue en coupe transversale d'un noyau 4 selon un quatrième mode de réalisation de l'invention. Le noyau est dans ce mode de réalisation constitué de deux parties 401, 402. La première 401 de ces parties est presque identique au noyau du premier mode de réalisation de l'invention et représenté aux figures 2 à 4. Ainsi, il comporte des évidements 45G, 45D régulièrement disposés dans la zone 48 (cf. fig. 2). Ladite zone 48 comportant un chant latéral gauche 42G, un chant latéral droit 42D et une âme centrale 44. Le chant latéral gauche 42G, respectivement le chant latéral droit 42D, est relié à l'âme centrale 44 par l'intermédiaire d'ailette gauche 46G, respectivement d'ailette droite 46D. Cette première partie de noyau se différentie du noyau décrit en référence aux figures 2 à 4 en ce qu'un décaissé 491 est ménagé à sa base. Le décaissé 491 s'étend longitudinalement sur toute la longueur de la zone 48 et transversalement sur une largeur légèrement plus large que les évidements 45G, 45D. Le décaissé 491 reçoit une plaque 49, laquelle plaque constituant la deuxième partie 402 du noyau 4. Lorsque le ski est en position d'utilisation, la plaque 49 se trouve sous l'âme centrale 44, les ailettes droite 46G et gauche 46D et une partie des chants latéraux 42G, 42D.

La plaque 49 et le décaissé 491 ont des formes parfaitement complémentaires si bien qu'une fois en place, la plaque 49 referme complètement les évidements 45G, 45D de la zone 48. Autrement dit, la plaque 49 disposée sous la première partie de noyau de façon à obstruer les évidements. La plaque 49 peut être réalisée dans un matériau similaire de celui du reste du noyau 4, comme du PU (polyuréthane) ou encore dans un autre matériau tel que du PET (polytéréphtalate d'éthylène). Dans la mesure où la plaque 49 à une épaisseur constante, elle pourra être préparée par découpe, aux dimensions désirées, d'un panneau.

Avantageusement, la présence de la plaque 49 empêche toute déformation au niveau des évidements 45G, 45D du renfort inférieur 3 et de la semelle de glisse 5. En effet, le risque de voir renfort inférieur 3 et semelle de glisse 5 s'enfoncer légèrement au regard des évidements 45G, 45D est totalement écarté. La planéité de la surface de glisse du ski est donc parfaitement assurée.

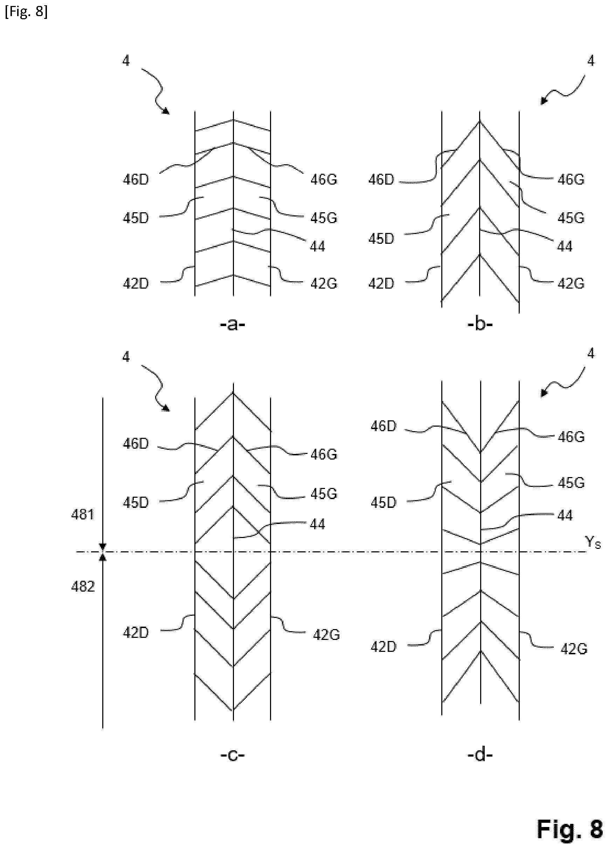

La figure 8 illustre de manière schématique d'autres modes de réalisation de l'invention. Pour des raisons de simplicité, seuls les axes respectifs de l'âme centrale 44, du chant latéral gauche 42G, du chant latéral droit 42D et des ailettes gauches 46G et droites 46D sont représentées. Il faut comprendre que les noyaux -a-, -b-, -c- et -d- sont, en ce qui concerne leurs autres caractéristiques, semblables aux noyaux précédemment décrits.

Le mode de réalisation -a- est un noyau pour lequel l'angle β_{46G} que fait l'axe de l'ailette gauche 46G avec l'axe longitudinal du noyau est relativement important, environ 75°. De ce fait on augmente la rigidité à l'écrasement transversal du noyau.

Le mode de réalisation -b- est un noyau pour lequel l'angle β_{46G} que fait l'axe de l'ailette gauche 46G avec l'axe longitudinal du noyau est beaucoup plus faible, de l'ordre de 40°. On privilégiera cette configuration dans le cas où le matériau choisi pour faire l'injection du noyau, est très visqueux.

Le mode de réalisation -c- est un noyau dans lequel l'écartement entre les ailettes est variable. Dans le cas d'espèce, il va grandissant à mesure qu'on s'éloigne de la portion centrale, longitudinalement parlant. Plusieurs configurations distinctes sont envisageables du mode de réalisation -c-. Dans une première, dite -c1-, les ailettes 46G, 46D gardent une largeur constante. Ainsi, au fur et à mesure qu'on s'éloigne du centre, les évidements 45G, 45D ont de plus en plus d'amplitude, si bien que, globalement, les portions du noyau éloignées du centre ont une densité moindre que celles du centre. Dans une deuxième, dite -c2-, la largeur des ailettes 46G, 46D augmente à mesure qu'on s'éloigne du centre, tandis que l'amplitudes des évidements 45G, 45D reste constante sur toute la longueur. Alors, la densité apparente des portions du noyau éloignées du centre est relativement plus importante que la densité apparente du centre. Toutes les configurations intermédiaires entre la configuration -c1- et -c2-, avec par exemple, un accroissement concomitant de l'épaisseur des ailettes et de l'amplitude des évidements sont envisageables également.

Le mode de réalisation -d- est un noyau dans lequel l'angle β_{46G}, β_{46D} que font les ailettes 46G, 46D est variable longitudinalement. Dans la partie antérieure 481, les ailettes gauche 46G1 font un angle β_{46G1} compris entre 5° et 85°avec l'axe longitudinal tandis que dans la partie postérieure 482, l'angle β_{46G2} que font les ailettes gauche 46G2, est compris entre 95° et 175°. Dans le cas d'espèce, dans la partie postérieure, et à proximité du centre, l'angle est sensiblement égal à 70° et il s'accroit à mesure qu'on s'éloigne du centre. De préférence, la variation de l'angle β_{46G} est évolutive, l'angle β_{46G} vaut environ 35° à son maximum. Les ailettes droites 46D1, 46D2 suivent un schéma symétrique des ailettes gauches 46G1, 46G2 par rapport à l'axe longitudinal du ski.

Les figures 9 à 11 illustrent un cinquième mode de réalisation proche du troisième mode de réalisation de la figure 6 à la différence que les évidements 45G et 45D sont traversants sur la toute la hauteur du noyau 4. Ces évidements 45G, 45D ne sont pas obturés par une partie du plateau supérieur 41.

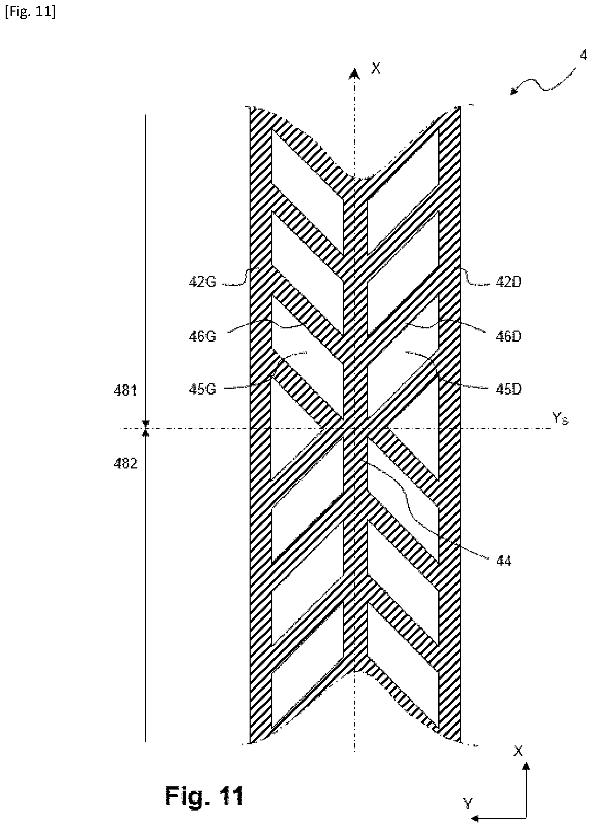

Comme pour le troisième mode de réalisation, la zone centrale 48, dans laquelle sont situées les évidements 45G, 45D se divise en plusieurs sections dont quatre sont visibles sur la figure 11. Dans chacun de ces sections, une pluralité d'évidements 45G ou 45D sont présents et ils sont disposés sensiblement parallèlement les uns aux autres. La disposition particulière des sections est réalisée selon une double symétrie. Il y a une symétrie selon l'axe longitudinal « X » et une symétrie selon un axe transversal « Ys », lequel coupe perpendiculairement l'axe longitudinal « X » au niveau du centre du noyau. La symétrie selon l'axe longitudinal a pour conséquence que la disposition des évidements respecte une symétrie par rapport au plan médial du noyau. Ce plan est le plan vertical orienté suivant l'axe longitudinal X. La symétrie selon l'axe transversal Ys a pour conséquence que la disposition des évidements respecte une symétrie par rapport à un plan transversal, lequel est perpendiculaire au plan médial.

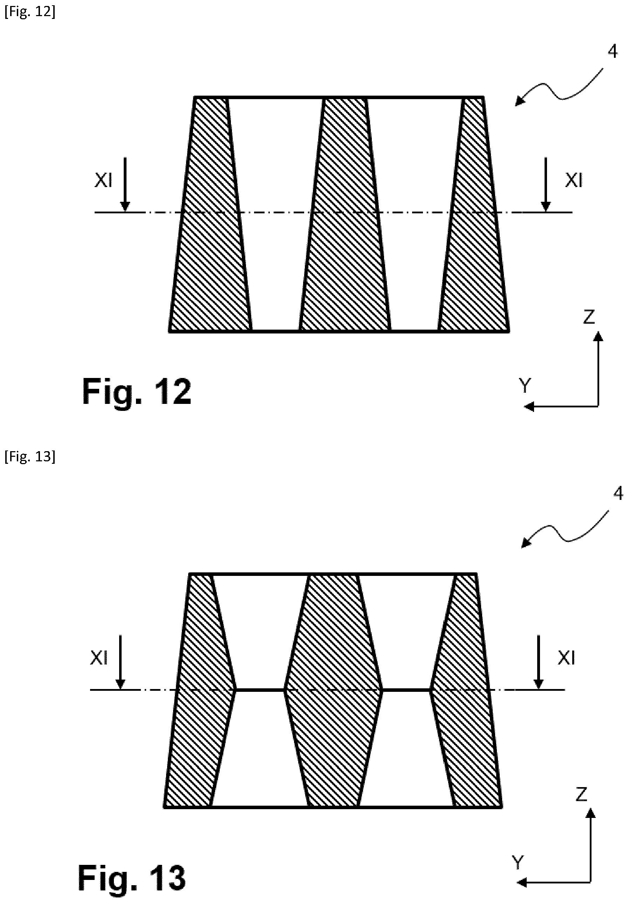

Les figures 12 à 15 montrent des sections transversales de noyaux selon quatre autres modes de réalisation de l'invention. Pour ces différents modes de réalisation de l'invention, seule la section transversale sera représentée, car la section horizontale XI-XI est identique à celle du cinquième mode de réalisation de l'invention représentée à la figure 11.

Le sixième mode de réalisation représenté à la figure 12 se distingue du cinquième mode de réalisation par la valeur de l'angle « δ ». En effet, dans cette configuration, ce sont les bases des évidements qui sont plus étroites que leur sommet.

La figure 13 montre une section transversale d'un noyau selon un septième mode de réalisation de l'invention. La forme des évidements est y est différente de celle des deux modes de réalisation précédents. En effet, la partie supérieure des évidements est évasée vers le haut et la partie inférieure est évasée vers le bas.

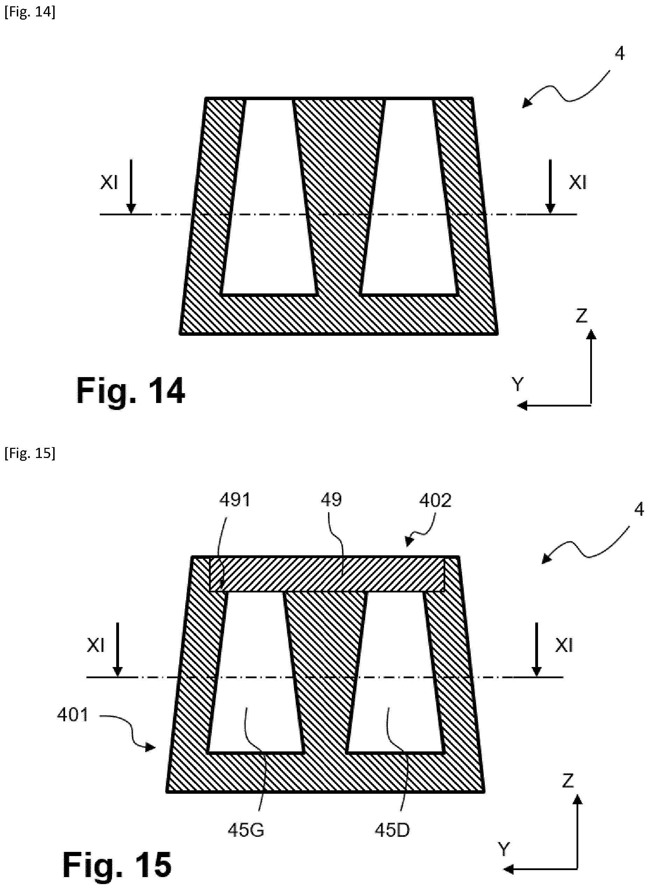

La figure 14 montre une section transversale d'un noyau selon un huitième mode de réalisation de l'invention. A la différence des modes de réalisation précédents, les évidements ne sont pas traversants et la partie inférieure du noyau constitue un plateau. Une telle configuration permet d'éviter les déformations en creux de la semelle de glisse. En effet, si un noyau conforme aux configurations des cinquième, sixième et septième modes de réalisation est utilisé avec un renfort inférieur qui ne présente pas une rigidité suffisante, ou encore, si les parties inférieures des évidements traversants de ces modes de réalisation présentent des circonférences trop importantes, il y a un risque que se forment des creux sur la semelle de glisse au regard des évidements.

La figure 15 montre une section transversale d'un noyau selon un neuvième mode de réalisation de l'invention. Le noyau est dans ce mode de réalisation constitué de deux parties 401, 402. La première 401 de ces parties est presque identique au noyau du huitième mode de réalisation de l'invention et représenté à la figure 14 et s'en distingue en ce qu'un décaissé 491 est ménagé à sa partie supérieure. Le décaissé 491 s'étend longitudinalement sur toute la longueur de la zone centrale 48 et transversalement sur une largeur légèrement plus large que les évidements 45G, 45D. Le décaissé 491 reçoit une plaque 49, laquelle plaque constituant la deuxième partie 402 du noyau. Lorsque le ski est en position d'utilisation, la plaque 49 se trouve sur l'âme centrale 44, les ailettes droite 46D et gauche 46G et une partie des chants latéraux 42G, 42D.

La plaque 49 et le décaissé 491 ont des formes parfaitement complémentaires si bien qu'une fois en place, la plaque 49 referme complètement les évidements 45G, 45D de la zone 48. La plaque 49 peut être réalisé dans un matériau similaire de celui du reste du noyau 4, comme du PU (polyuréthane) ou encore dans un matériau tel que du PET (polytéréphtalate d'éthylène). Dans la mesure où la plaque 49 à une épaisseur constante, elle pourra être préparé par découpe, aux dimensions désirées, d'un panneau.

Avantageusement, la présence de la plaque 49 empêche toute déformation, au niveau des évidements 45G, 45D, du renfort supérieur 2 et de la couche de dessus 6. La plaque 49 assure également un meilleur ancrage du dispositif de fixation de ski qui est prévu pour relier la chaussure au ski.

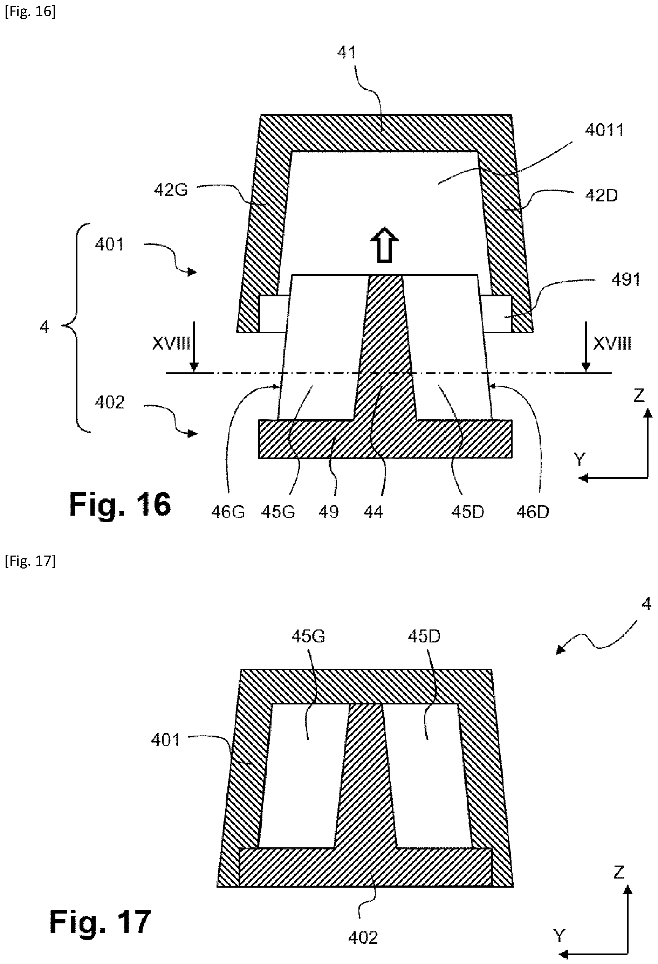

Les figures 16 à 18 montrent un dixième mode de réalisation de l'invention qui reprend comme le neuvième mode de réalisation l'idée d'un noyau réalisé en deux parties ; une partie supérieure 401 et une partie inférieure 402. La partie inférieure 402 n'est présente que dans la zone centrale 48. Au sein de cette zone, la partie supérieure 401 se décompose en un plateau supérieur 41, un chant latéral gauche 42G et un chant latéral droit 42D. Ces trois éléments entourent une cavité 4011. Dans les zones avant 4AV et arrière 4AR du noyau, seule la partie supérieure 401 est présente et constitue l'intégralité du noyau.

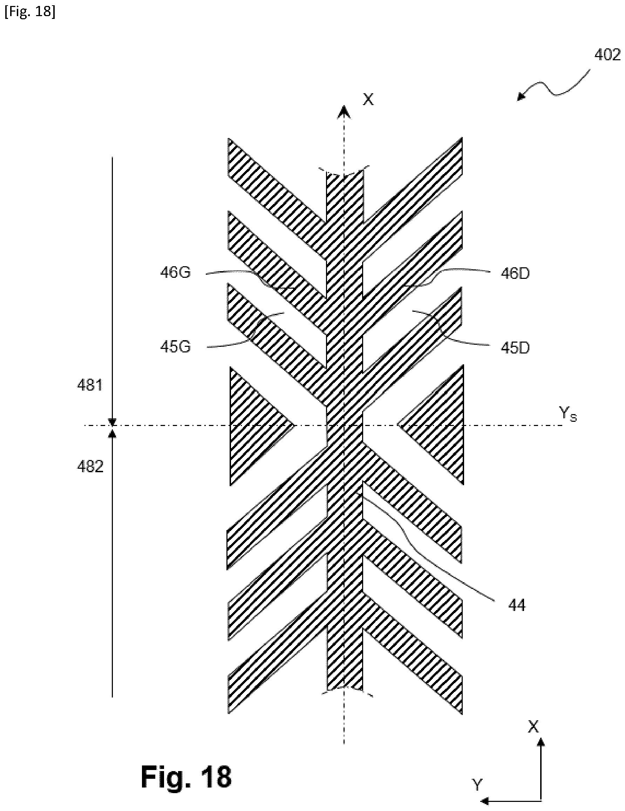

La partie inférieure 402 est, quant à elle, constitué d'un plateau 49 horizontal depuis lequel se projettent verticalement une âme centrale 44 et une pluralité d'ailettes gauches 46G et droites 46D délimitant des évidements 45G, 45D. De manière similaire aux modes de réalisation précédents, la zone centrale du noyau se divise en plusieurs sections à l'intérieur desquelles les ailettes gauches ou droites sont disposées parallèlement. La figure 18 illustre la section de la partie inférieure du noyau selon XVII-XVII de la figure 16. Dans un premier secteur, les ailettes gauche 46G sont toutes orientées selon une direction qui fait un angle β_{46G} avec l'axe longitudinal X du ski. De manière symétrique, dans un deuxième secteur, les ailettes droites 46D sont toutes orientées selon une direction qui fait un angle β_{46D} avec l'axe longitudinal X du ski, de même valeur absolue que l'angle β_{46G}. L'angle β_{46G}, β_{46D} doit être différent de l'angle droit (90°) ou pour le moins, ne pas s'en approcher. On pourra choisir un angle β_{46G}, β_{46D} compris entre 5° et 85°. De préférence, on choisira une valeur comprise entre 30° et 60°. Dans le dixième mode de réalisation de l'invention illustré ici, l'angle β_{46G}, β_{46D} est sensiblement égal à 45°. On note également une disposition symétrique des ailettes de la deuxième partie 402 du noyau par rapport à un axe de symétrie Ys comme dans les modes de réalisation précédents comme on le voit à la figure 11.

La figure 17 montre le noyau du dixième mode de réalisation de l'invention, une fois que les deux parties 401, 402 qui le constituent sont assemblées l'une avec l'autre. Avantageusement, le noyau ainsi obtenu présente une structure qui associe excellente rigidité et légèreté. En effet, au niveau de la zone centrale 48, la partie supérieure 401 et le plateau 49 de la partie inférieure 402 constitue une boîte fermée, laquelle est, de plus, étayée par l'âme centrale 44 et les ailettes gauches 46G et droites 46D. D'autre part, entre les ailettes adjacentes 46G, 46D, sont créés une pluralité d'évidements 45G, 45D qui allègent la structure. Chacune des deux parties 401, 402 peut être réalisée dans une même matière, par exemple en polyuréthane (voir ci-dessus la description associée au premier mode de réalisation de l'invention). Avantageusement, on peut également choisir deux matières différentes pour la fabrication des deux parties. L'injection est une méthode particulièrement adaptée pour produire les deux parties, mais ce n'est pas la seule car tout autre moyen de production peut être utilisé, comme par exemple, l'impression 3D.

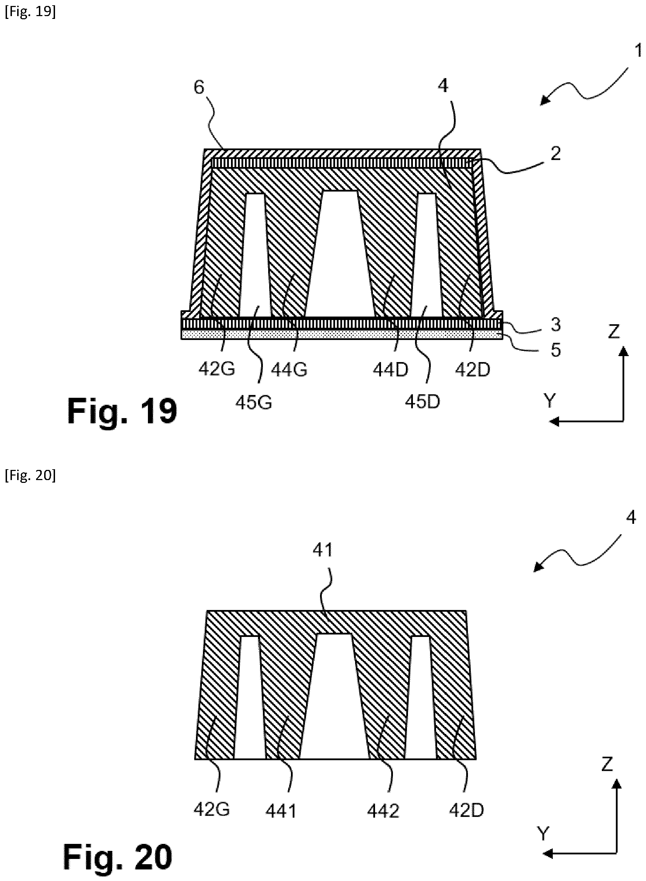

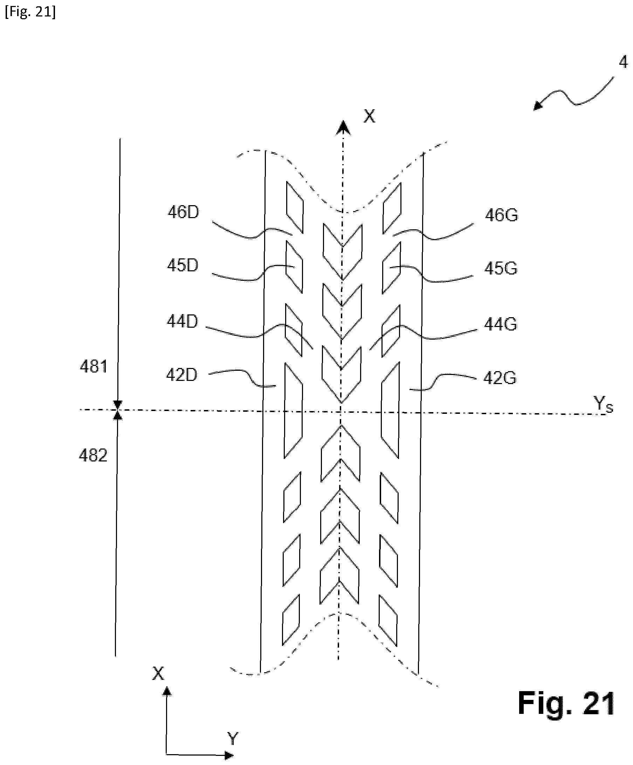

Les figures 19 à 21 décrivent un onzième mode de réalisation de l'invention. La figure 21 montre une vue en coupe transversale du noyau 4 au niveau de la zone centrale 48. Celui-ci comprend comme dans certains des modes de réalisation précédents un chant latéral gauche 42G et une chant latéral droit 42D et un plateau supérieur 41. Il comprend en revanche deux âmes centrales 44G et 44D et non pas une seule comme tous les précédents modes de réalisation. La figure 21 qui représente en vue de dessous partielle, la zone centrale 48, montre comment, dans chacune des sections qui la composent, les évidements 45G, 45D sont disposés parallèlement les uns aux autres. La figure 19 montre en coupe transversale un ski équipé d'un tel noyau....

Quel que soit le mode de réalisation selon l'invention, le noyau comprend toujours
- une pluralité d'ailettes gauches 46G disposée entre au moins une âme centrale 44, 44G et le chant latéral gauche 42G, chaque ailette gauche faisant un angle compris entre 5° et 85° ou entre 95° et 175° avec l'axe longitudinal X du ski,
- une pluralité d'ailettes droite 46D est disposée entre au moins une âme centrale 44, 44D et le chant latéral droit 42D, chaque ailette droite faisant un angle compris entre 5° et 85° ou entre 95° et 175° avec l'axe longitudinal X du ski,
- une pluralité d'espaces interstitiels gauches, appelés évidements gauches 45G, chaque espace interstitiel gauche étant défini entre deux ailettes gauches, le chant latéral gauche et au moins une âme centrale,
- une pluralité d'espaces interstitiels droits, appelés évidements droits 45D, chaque espace interstitiel droite étant défini entre deux ailettes droits, le chant latéral droit et au moins une âme centrale.

Quelle que soit, la configuration choisie, la géométrie particulière des noyaux conçus selon l'invention permet d'optimiser la fabrication d'un ski. En effet, le noyau est non seulement léger, tout en garantissant une excellente rigidité. D'autre part, il peut être plus facile à produire par injection. Les nombreux évidements allègent le noyau et les ailettes font office de nervures de structure qui empêchent le rapprochement des chants latéraux avec l'âme centrale. Lors de la fabrication par injection du noyau, l'inclinaison des ailettes facilite le flux de la matière et ainsi le remplissage uniforme du moule.

L'invention ne se limite pas aux quelques modes de réalisation décrits ci-dessus à titre d'exemple, mais est définie par les revendications annexées.

### Références

1- Ski
2- Renfort supérieur
3- Renfort inférieur
4- Noyau
   401- Première partie (supérieure)
   402- Deuxième partie (inférieure)
   41- Plateau supérieure
   42G- Chant latéral gauche
   42D- Chant latéral droit
   44- Ame central
   44G- Ame central gauche
   44D- Ame central droite
   45G- Evidement gauche
   45D- Evidement droit
   46G- Ailette gauche
   46D- Ailette droite
   48- Zone centrale
      481- Partie antérieure
      482- Partie postérieure
   49- Plaque
      491- Décaissé
5- Semelle de glisse
6- Couche de dessus

## Revendications

1. Ski (1) comprenant un noyau (4) comportant
- un chant latéral gauche (42G),
- un chant latéral droit (42D) et,
- au moins une âme centrale (44, 44G, 442D) placée entre les deux chants latéraux, lesdits chants latéraux et ladite au moins une âme centrale s'étendant selon un axe longitudinal sensiblement parallèle à l'axe longitudinal X du ski, où le noyau comprend
- une pluralité d'ailettes gauches (46G) disposée entre au moins une âme centrale (44, 44G) et le chant latéral gauche (42G), chaque ailette gauche faisant un angle compris entre 5° et 85° ou entre 95° et 175° avec l'axe longitudinal X,
- une pluralité d'ailettes droite (46D) est disposée entre au moins une âme centrale (44, 44D) et le chant latéral droit (42D), chaque ailette droite faisant un angle compris entre 5° et 85° ou entre 95° et 175° avec l'axe longitudinal X, et en ce que le noyau comprend une pluralité d'évidements (45G, 45D), chaque évidement étant délimité par deux ailettes adjacentes (46G, 46D), chaque évidement étant borgne ou traversant toute la hauteur du noyau, **caractérisé en ce que** lesdits évidements (45G, 46D) sont disposés sur la majeur partie d'une portion centrale (48) du noyau, selon la direction longitudinale.

2. Ski (1) selon la revendication 1 **caractérisé en ce qu'**aucun évidement (45G, 46D) n'est ménagé dans la zone avant (4AV), ni dans la zone arrière (4AR) du noyau (4).

3. Ski (1) selon l'une des revendications précédentes **caractérisé en ce que**, dans son épaisseur, le ski est composé d'une succession de cinq éléments depuis le sol, à savoir, une semelle de glisse (5), un renfort inférieur (3), le noyau (4), un renfort supérieur (2) et une couche de dessus (6), au moins les chants latéraux gauche (42G) et droite (42D) s'étendant sur toute la hauteur du noyau.

4. Ski (1) selon l'une des revendications précédentes **caractérisé en ce que** la hauteur (H4) du noyau (4) est toujours au moins égale à 50% de la hauteur (H1) du ski (1) dans la zone évidée du noyau.

5. Ski (1) selon l'une des revendications précédentes **caractérisé en ce que** le noyau comporte un plateau supérieur horizontal (41), le chant latéral gauche (42G) et le chant latéral droit (42D) s'étendant tous deux vers le bas depuis les bords latéraux, respectivement gauche et droit, du plateau supérieur.

6. Ski (1) selon l'une des revendications précédentes **caractérisé en ce que** le noyau est composé de deux composants (401, 402) assemblés l'un à l'autre, un ces composants portant les chants latéraux gauche et droit.

7. Ski (1) selon la revendication précédente **caractérisé en ce qu'**un des composants du noyau est une plaque (49) de sorte à refermer les évidements (45G, 45D).

8. Ski (1) selon la revendication précédente **caractérisé en ce que** la plaque (49) porte la ou les âmes centrales (44, 44G, 44D) et/ou les ailettes (46G, 46D).

9. Ski (1) selon l'une des revendications précédentes **caractérisé en ce que** les ailettes gauches et les ailettes droites sont disposées symétriquement par rapport à l'axe longitudinal X du ski.

10. Ski (1) selon l'une des revendications précédentes **caractérisé en ce que**
- dans une portion antérieure (481) du noyau, les ailettes gauches font un angle compris entre 5° et 85° avec l'axe longitudinal X du ski et les ailettes droites font un angle compris entre 95° et 175° avec l'axe longitudinal X du ski, et,
- dans une portion postérieure (482) du noyau, les ailettes gauches font un angle compris entre 95° et 175° avec l'axe longitudinal X du ski et les ailettes droites font un angle compris entre 5° et 85° avec l'axe longitudinal X du ski,
ou inversement.

11. Ski (1) selon l'une des revendications précédentes **caractérisé en ce que** le noyau est réalisé par injection.

12. Ski (1) selon l'une des revendications précédentes **caractérisé en ce que** les ailettes sont agencées de sorte que leur largeur est sensiblement égale à l'espace séparant deux ailettes adjacentes.

13. Ski selon l'une des revendications précédentes **caractérisé en ce que** la base du chant latéral gauche (42G), respectivement du chant latéral droit (42D), respectivement d'une âme centrale (44), respectivement des ailettes gauches (46G) et droites (46D), présente une largeur L_{42G}, respectivement L_{42D}, respectivement L₄₄, respectivement L_{46G} et L_{46D}, qui est sensiblement égale et comprise entre deux et huit millimètres.

14. Ski (1) selon l'une des revendications précédentes **caractérisé en ce que** les ailettes gauches, respectivement les ailettes droites, du noyau ne forment par toutes le même angle avec l'axe longitudinal X du ski.

15. Ski (1) selon l'une des revendications précédentes **caractérisé en ce que** le noyau comprend deux âmes centrales (44G, 44D).

## Patentansprüche

1. Ski (1), der einen Kern (4) beinhaltet, der Folgendes umfasst:
- eine linke Seitenwange (42G),
- eine rechte Seitenwange (42D) und
- mindestens ein Mittelstück (44, 44G, 442D), das zwischen den zwei Seitenwangen platziert ist,
wobei sich die Seitenwangen und das mindestens eine Mittelstück entlang einer Längsachse erstrecken, die im Wesentlichen parallel zu der Längsachse X des Skis ist, wobei der Kern Folgendes beinhaltet:
- eine Vielzahl von linken Rippen (46G), die zwischen mindestens einem Mittelstück (44, 44G) und der linken Seitenwange (42G) angeordnet ist, wobei jede linke Rippe mit der Längsachse X einen Winkel zwischen 5° und 85° oder zwischen 95° und 175° bildet,
- eine Vielzahl von rechten Rippen (46D), die zwischen mindestens einem Mittelstück (44, 44D) und der rechten Seitenwange (42D) angeordnet ist, wobei jede rechte Rippe mit der Längsachse X einen Winkel zwischen 5° und 85° oder zwischen 95° und 175° bildet,
und dass der Kern eine Vielzahl von Aussparungen (45G, 45D) beinhaltet, wobei jede Aussparung durch zwei nebeneinanderliegende Rippen (46G, 46D) begrenzt wird, wobei jede Aussparung nicht durchgehend ist oder die gesamte Höhe des Kerns durchquert, **dadurch gekennzeichnet, dass** die Aussparungen (45G, 46D) entlang der Längsrichtung in dem Großteil eines mittleren Abschnitts (48) des Kerns angeordnet sind.

2. Ski (1) nach Anspruch 1, **dadurch gekennzeichnet, dass** weder in dem vorderen Bereich (4AV) noch in dem hinteren Bereich (4AR) des Kerns (4) eine Aussparung (45G, 46D) eingerichtet ist.

3. Ski (1) nach einem der vorhergehenden Ansprüche, **dadurch gekennzeichnet, dass** der Ski in seiner Dicke aus einer Folge von fünf Elementen vom Boden aus besteht, nämlich einer Lauffläche (5), einer unteren Verstärkung (3), dem Kern (4), einer oberen Verstärkung (2) und einer Deckschicht (6), wobei sich mindestens die linke (42G) und die rechte (42D) Seitenwange über die gesamte Höhe des Kerns erstrecken.

4. Ski (1) nach einem der vorhergehenden Ansprüche, **dadurch gekennzeichnet, dass** die Höhe (H4) des Kerns (4) in dem mit Aussparungen versehenen Bereich des Kerns immer noch mindestens 50 % der Höhe (H1) des Skis (1) entspricht.

5. Ski (1) nach einem der vorhergehenden Ansprüche, **dadurch gekennzeichnet, dass** der Kern eine horizontale obere Tafel (41) umfasst, wobei sich die linke Seitenwange (42G) und die rechte Seitenwange (42D) beide von der linken bzw. rechten Seitenkante der oberen Tafel nach unten erstrecken.

6. Ski (1) nach einem der vorhergehenden Ansprüche, **dadurch gekennzeichnet, dass** der Kern aus zwei zusammengefügten Komponenten (401, 402) besteht, wobei eine der Komponenten die linke und die rechte Seitenwange trägt.

7. Ski (1) nach dem vorhergehenden Anspruch, **dadurch gekennzeichnet, dass** eine der Komponenten des Kerns eine Platte (49) ist, um die Aussparungen (45G, 45D) zu verschließen.

8. Ski (1) nach dem vorhergehenden Anspruch, **dadurch gekennzeichnet, dass** die Platte (49) das oder die Mittelstücke (44, 44G, 44D) und/oder die Rippen (46G, 46D) trägt.

9. Ski (1) nach einem der vorhergehenden Ansprüche, **dadurch gekennzeichnet, dass** die linken Rippen und die rechten Rippen mit Bezug auf die Längsachse X des Skis symmetrisch angeordnet sind.

10. Ski (1) nach einem der vorhergehenden Ansprüche, **dadurch gekennzeichnet, dass**
- in einem Vorderabschnitt (481) des Kerns die linken Rippen mit der Längsachse X des Skis einen Winkel zwischen 5° und 85° bilden und die rechten Rippen mit der Längsachse X des Skis einen Winkel zwischen 95° und 175° bilden und
- in einem Hinterabschnitt (482) des Kerns die linken Rippen mit der Längsachse X des Skis einen Winkel zwischen 95° und 175° bilden und die rechten Rippen mit der Längsachse X des Skis einen Winkel zwischen 5° und 85° bilden
oder umgekehrt.

11. Ski (1) nach einem der vorhergehenden Ansprüche, **dadurch gekennzeichnet, dass** der Kern mittels Spritzguss hergestellt ist.

12. Ski (1) nach einem der vorhergehenden Ansprüche, **dadurch gekennzeichnet, dass** die Rippen so eingerichtet sind, dass ihre Breite im Wesentlichen dem Raum entspricht, der zwei nebeneinanderliegende Rippen trennt.

13. Ski nach einem der vorhergehenden Ansprüche, **dadurch gekennzeichnet, dass** die Basis der linken Seitenwange (42G) bzw. der rechten Seitenwange (42D) bzw. eines Mittelstücks (44) bzw. der linken (46G) und rechten (46D) Rippen eine Breite von L_{42G} bzw. L_{42D} bzw. L₄₄ bzw. L_{46G} und L_{46D} aufweist, die im Wesentlichen gleich ist und zwischen zwei und acht Millimeter beträgt.

14. Ski (1) nach einem der vorhergehenden Ansprüche, **dadurch gekennzeichnet, dass** die linken Rippen bzw. die rechten Rippen des Kerns nicht alle den gleichen Winkel mit der Längsachse X des Skis bilden.

15. Ski (1) nach einem der vorhergehenden Ansprüche, **dadurch gekennzeichnet, dass** der Kern zwei Mittelstücke (44G, 44D) beinhaltet.

## Claims

1. Ski (1) comprising a core (4) having
- a left-hand lateral edge (42G),
- a right-hand lateral edge (42D), and
- at least one central web (44, 44G, 442D) placed between the two lateral edges,
said lateral edges and said at least one central web extending along a longitudinal axis substantially parallel to the longitudinal axis X of the ski,
wherein the core comprises
- a plurality of left-hand fins (46G) arranged between at least one central web (44, 44G) and the left-hand lateral edge (42G), each left-hand fin forming an angle of between 5° and 85° or between 95° and 175° with the longitudinal axis X,
- a plurality of right-hand fins (46D) arranged between at least one central web (44, 44D) and the right-hand lateral edge (42D), each right-hand fin forming an angle of between 5° and 85° or between 95° and 175° with the longitudinal axis X,
and in that the core comprises a plurality of recesses (45G, 45D), each recess being delimited by two adjacent fins (46G, 46D), each recess being blind or passing through the entire height of the core, **characterized in that** said recesses (45G, 46D) are arranged over the majority of a central portion (48) of the core, in the longitudinal direction.

2. Ski (1) according to Claim 1, **characterized in that** no recess (45G, 46D) is formed in the front region (4AV) or in the rear region (4AR) of the core (4).

3. Ski (1) according to either of the preceding claims, **characterized in that**, in its thickness, the ski is composed of a succession of five elements from the ground up, namely a gliding base (5), a lower reinforcement (3), the core (4), an upper reinforcement (2) and a topsheet (6), at least the left-hand (42G) and right-hand (42D) lateral edges extending over the entire height of the core.

4. Ski (1) according to one of the preceding claims, **characterized in that** the height (H4) of the core (4) is always at least equal to 50% of the height (H1) of the ski (1) in the recessed region of the core.

5. Ski (1) according to one of the preceding claims, **characterized in that** the core has a horizontal upper plateau (41), the left-hand lateral edge (42G) and the right-hand lateral edge (42D) both extending downwards from the left-hand and right-hand lateral sides, respectively, of the upper plateau.

6. Ski (1) according to one of the preceding claims, **characterized in that** the core is composed of two assembled-together components (401, 402), one of these components bearing the left-hand and right-hand lateral edges.

7. Ski (1) according to the preceding claim, **characterized in that** one of the components of the core is a plate (49) in order to close off the recesses (45G, 45D).

8. Ski (1) according to the preceding claim, **characterized in that** the plate (49) bears the one or more central webs (44, 44G, 44D) and/or the fins (46G, 46D).

9. Ski (1) according to one of the preceding claims, **characterized in that** the left-hand fins and the right-hand fins are arranged symmetrically with respect to the longitudinal axis X of the ski.

10. Ski (1) according to one of the preceding claims, **characterized in that**
- in an anterior portion (481) of the core, the left-hand fins form an angle of between 5° and 85° with the longitudinal axis X of the ski and the right-hand fins form an angle of between 95° and 175° with the longitudinal axis X of the ski, and
- in a posterior portion (482) of the core, the left-hand fins form an angle of between 95° and 175° with the longitudinal axis X of the ski and the right-hand fins form an angle of between 5° and 85° with the longitudinal axis X of the ski,
or vice versa.

11. Ski (1) according to one of the preceding claims, **characterized in that** the core is produced by injection moulding.

12. Ski (1) according to one of the preceding claims, **characterized in that** the fins are arranged such that their width is substantially equal to the space separating two adjacent fins.

13. Ski according to one of the preceding claims, **characterized in that** the bottom of the left-hand lateral edge (42G), of the right-hand lateral edge (42D), of a central web (44) and of the left-hand (46G) and right-hand (46D) fins, respectively, has a substantially equal width L_{42G}, L_{42D}, L₄₄, L_{46G} and L_{46D}, respectively, of between two and eight millimetres.

14. Ski (1) according to one of the preceding claims, **characterized in that** the left-hand fins and the right-hand fins, respectively, of the core do not all form the same angle with the longitudinal axis X of the ski.

15. Ski (1) according to one of the preceding claims, **characterized in that** the core comprises two central webs (44G, 44D).
